# EUROPEAN PATENT APPLICATION

(11) **EP 1 115 210 A1**
(43) Date of publication of application: **11.07.2001**
(21) Application number: 00931632.4
(22) Date of filing: 01.06.2000
(51) Int. Cl.: H04B 1/04, H04B 7/26, H04L 12/28, H04L 12/58, H04Q 7/38

(54) **PACKET COMMUNICATION DEVICE AND TRANSMISSION POWER CONTROL METHOD**

(30) Priority: 03.06.1999 JP 15666399; 02.07.1999 JP 18864999
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0003525
(87) International publication number: WO0076075

(57) **Abstract**

When a transmitting station successively undergoes control for increasing transmit power, the station does not increase the power on a packet, and reflects the power control in transmitting a next packet. Otherwise, the station increases the power only of a pilot signal portion for use in determining a quality of received signal without increasing the power of a data portion in the packet, and adjusts the transmit power of the data portion using that of the pilot portion in transmitting a next packet.

## Description

### Technical Field

The present invention relates to a packet communication apparatus and transmit power control method used in a radio communication system.

### Background Art

It is required in a packet communication for a receiving station to receive a packet or a transmission unit, which is obtained by dividing the packet into portions, transmitted from a transmitting station through a propagation path without data error. Therefore, the transmitting station generally performs error correcting coding per unit transmission portion, and the receiving station performs error detection and error correction per unit transmission portion.

It sometimes happens during the time a packet is transmitted that an error beyond the capability of the error correcting coding occurs on a transmission unit, and therefore cannot be corrected. In such a case, a receiving station abandons the packet, and requests a transmitting station to retransmit the packet.

In order to perform stable communications in the case of performing a packet communication in a radio communication where a propagation path environment changes rapidly, there is proposed a method in which power control is performed in addition to the above error correcting coding (Japan Laid Open Patent Publication HEI9-233021). The power control is performed in such a way that a quality on a propagation path is estimated from a received signal, and deterioration on the propagation path is corrected corresponding to the estimated quality.

Specifically, a receiving station detects a quality of received signal per packet or unit transmission portion, estimates a propagation path environment based on the received quality, generates power control information corresponding to the propagation path environment, and transmits a signal including the power control information to a transmitting station. The transmitting station adjusts transmit power based on the power control information.

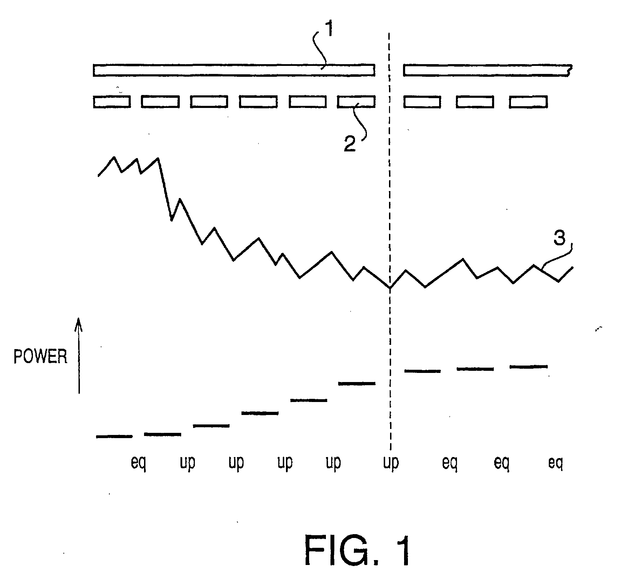

FIG.1 is a schematic view showing a quality of received signal and power control status in a conventional packet communication apparatus when a propagation path quality deteriorates for a long term. In FIG.1, reference numeral "1" denotes a transmission packet, and reference numeral "2" denotes a transmission unit. Reference numeral "3" denotes a change in the received quality in a packet receiving station.

When the received quality, i.e., received quality 3 deteriorates on transmission packet 1 or unit transmission portion 2, a transmitting station performs control for increasing transmit power successively a plurality of times. According to the control, the transmitting station increases the transmit power successively as shown in FIG.1.

However, in such a condition that the control for increasing the transmit power is performed successively, it is considered to happen often that there is an error on a transmission unit received before the transmit power is increased, or an error that cannot be corrected occurs on a transmission unit that is transmitted with increased transmit power, and that retransmission of the packet is needed because the packet is not constructed.

Therefore, although the power control is performed based on a quality of received signal and transmit power is increased, when retransmission of a packet is needed because there is an error on a transmission unit received before the transmit power is increased, or an error that cannot be corrected occurs on a transmission unit, the retransmission of the packet is sometimes unavoidable due to the error on the received unit transmission portion. Further, increasing the transmit power may increase interference in peripheral communication stations. Accordingly in this case, the power is consumed wastefully, resulting in a problem that an efficient packet communication is not performed.

### Disclosure of Invention

It is an object of the present invention to provide an efficient packet communication apparatus and transmit power control method capable of achieving battery saving without increasing extra interference in other communication stations.

It is a subject matter of the present invention that when a communication channel condition is poor, power control information is stored without increasing transmit power on transmission units in a packet under the poor condition, and the control information is reflected in transmitting a next packet, whereby interference in peripheral communication stations is decreased, the efficiency of the packet communication is increased, and total transmit power is decreased, thereby enabling battery saving.

### Brief Description of Drawings

FIG.1 is a schematic view showing a quality of received signal and power control status in a conventional packet communication apparatus;
FIG.2 is a block diagram illustrating a configuration of a packet communication apparatus according to a first embodiment of the present invention;
FIG.3 is a schematic view showing a quality of received signal and power control status in the packet communication apparatus according to the above embodiment;
FIG.4 is a flowchart to explain an operation of the packet communication apparatus according to the above embodiment;
FIG.5 is a block diagram illustrating a configuration of a packet communication apparatus according to a second embodiment of the present invention;
FIG.6 is a schematic view showing a quality of received signal and power control status in the packet communication apparatus according to the above embodiment; and
FIG.7 is a flowchart to explain an operation of the packet communication apparatus according to the above embodiment.

### Best Mode for Carrying Out the Invention

Embodiments of the present invention are explained specifically below with reference to accompanying drawings.

### (First embodiment)

The first embodiment explains a constitution that a packet undergoing control for increasing transmit power a plurality of times successively is judged to have a high possibility that the packet is retransmitted because the packet has an error that makes it impossible to construct the packet after receiving it, transmit power is thereby not increased on transmission units in the packet after the control is performed the plurality of times, power control information is stored, and that the control information is reflected in transmitting a next packet.

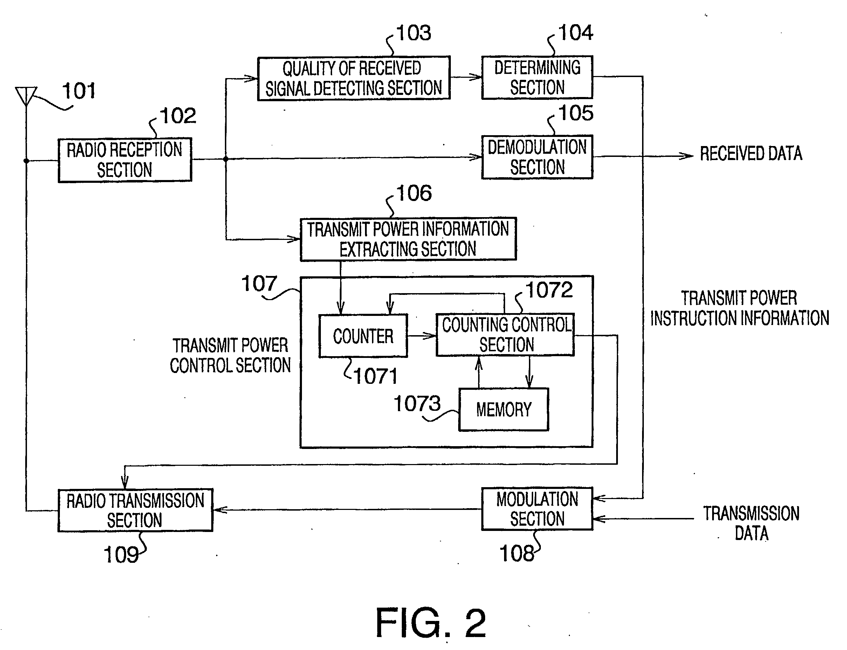

FIG.2 is a block diagram illustrating a configuration of a packet communication apparatus according to the first embodiment of the present invention.

A signal transmitted from a communication partner is received at radio reception section 102 through antenna 101. Radio reception section 102 performs on the received signal processing of amplification (gain control), downconverting and A/D conversion. The A/D converted signal is output to demodulation section 105, and is demodulated to be received data. The A/D converted signal is further output to received quality detecting section 103 and transmit power information extracting section 106.

Received quality detecting section 103 measures, for example, SIR (Signal to Interference Ratio) and received power to detect a quality of received signal. The detected result of the received quality is output to determining section 104. Based on the detected result, determining section 104 determines whether to increase, maintain or decrease transmit power, and outputs transmit power instruction information to modulation section 108.

Transmit power information extracting section 106 extracts the transmit power instruction information from the A/D converted signal, and inputs the transmit power instruction information to counter 1071 in transmit power control section 107.

In transmit power control section 107, counter 1071 counts the number of pieces of input transmit power instruction information. Counting control section 1072 in transmit power control section 107 controls transmit power in radio reception section 109 according to the transmit power instruction information, while observing the count number of counter 1071 to instruct start and halt of transmit power control. Further, counting control section 1072 performs reset of counter 1071. Memory 1073 stores transmit power instruction information therein.

Meanwhile, transmission data is output to modulation section 108 as well as the transmit power instruction information to be modulated, and then output to radio transmission section 109. Radio transmission section 109 performs on the modulated signal processing of D/A conversion, upconverting and amplification (gain control). Thus processed signal is transmitted through antenna 101 as a transmission signal.

An explanation is given of the operation of the packet communication apparatus with the above configuration.

Radio reception section 102 performs predetermined processing on a received signal, and outputs the resultant signal to transmit power information extracting section 106. Transmit power instruction information extracted in transmit power information extracting section 106 is input to counter 1071 in transmit power control section 107. According to the transmit power instruction information, transmit power control section 107 provides an instruction for increasing or decreasing transmit power to radio transmission section 109, while when the section 107 receives the instruction information for increasing the power a predetermined number of times successively, storing the transmit power information in memory 1073 without increasing the transmit power of transmission units in a packet after receiving the information a predetermined number of times, and reflecting the transmit power information collectively at the time of starting transmitting a next packet.

Specifically, counter 1071 first counts the number of times the transmit power instruction information indicative of increasing the power is repeated successively. counting control section 1072 observes whether or not the instruction information for increasing the power is repeated successively a predetermined number of times. For example, the count number of the instruction information for increasing the power is compared with a threshold.

Then, when transmit power control section 107 detects a situation that the instruction information for increasing the power is repeated successively a predetermined number of times, for example, when the number of times the instruction information for increasing the power is repeated successively exceeds a predetermined threshold, the section 107 does not provide an instruction signal for increasing the power to radio transmission section 109 with respect to transmission units after the situation, and stores the instruction information in memory 1073. After that, at the time of transmitting a next packet, the section 107 fetches the instruction information stored in memory 1073, and outputs the instruction signal to radio transmission section 109 so as to reflect all the instruction information.

Meanwhile, when the instruction information for increasing the power is not repeated successively a predetermined number of times, transmit power control section 107 outputs the instruction signal for increasing or decreasing the power to radio transmission section 109 according to the transmit power instruction information. Radio transmission section 109 adjusts a gain according to the instruction signal using a gain controller such as an amplifier, and thereby performs transmit power control.

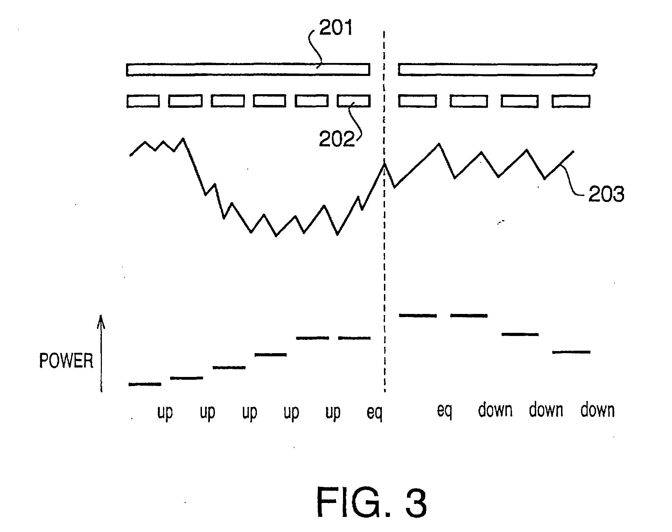

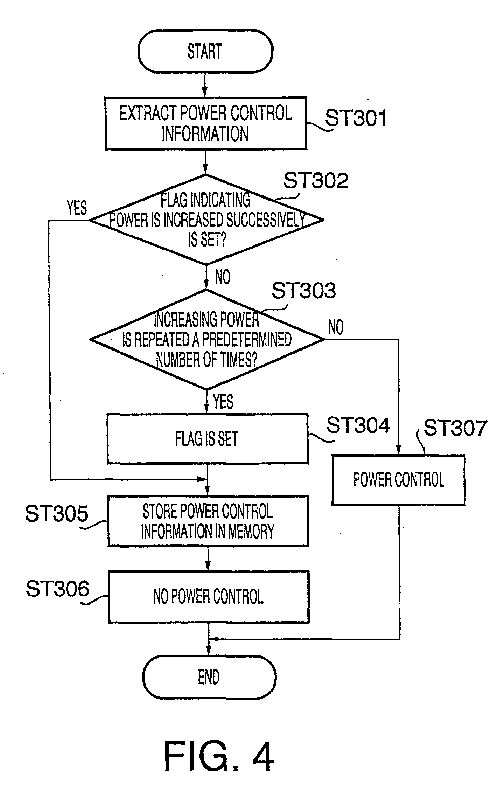

The power control is performed as shown in FIG.3. Packet 201 is divided into a plurality of transmission units 202 to be transmitted sequentially. When received quality 203 deteriorates due to a variation in a propagation path, power control instruction information for increasing transmit power is output under the transmit power control. In this case, when the instruction for increasing the power is repeated a predetermined number of times (four times in FIG.4), the transmit power control is halted. In FIG.3, the last unit transmission portion of the packet does not undergo the transmit power control. In this case, the power control instruction information on the last unit transmission portion of the packet is stored in the memory, and is reflected in the transmit power control on a beginning unit transmission portion of a next pocket. Proper transmit power control is thereby performed starting from a next packet signal. It is therefore possible to perform efficient communications while decreasing interference in other stations.

The transmit power control method as described above is next explained using a flowchart in FIG.4.

At step (hereinafter abbreviated as ST) 301, power control instruction information is extracted from a received signal. At ST302, it is judged that a flag is set indicative of that the power control instruction information is repeated successively a predetermined number of times.

When the flag is not set, it is judged that the power control instruction information is indicative of increasing power and that the power increasing instruction is repeated successively a predetermined number of times (ST303). When the power increasing instruction is repeated successively a predetermined number of times, the flag is set (ST304), while when the power increasing instruction is not repeated successively a predetermined number of times, the power control is performed according to the power control instruction information (ST307). Further, when the flag is set, the power control instruction information is stored in the memory (ST305), and the power control is halted (ST306).

When the power increasing instruction is repeated successively a predetermined number of times, the power control instruction information is stored in the memory (ST305), and the power control is halted (ST306). Then, the power control instruction information stored in the memory is reflected in the transmit power control on a beginning unit transmission portion of a next packet.

A situation that the control for increasing transmit power is repeated successively indicates that a condition is continued that increasing the transmit power does not sufficiently compensate for deterioration of a received signal quality due to propagation path degradation. In this case, it is considered that transmission units are not received accurately, and that a possibility that a packet is eventually retransmitted is high.

According to the transmit power control method of this embodiment, successive pieces of power control instruction information are counted, and when the control information for increasing the power is repeated successively a predetermined number of times or more, the power control is halted and the power control information is only stored, whereby it is possible to suppress wasteful power consumption by not increasing the transmit power. Further, the stored power control instruction information is reflected in a transmission unit of a next slot, thereby enabling the packet to be transmitted assuredly.

Furthermore, since transmission is not performed with unreasonable high power on a poor communication channel, it is possible to reduce interference in peripheral communication stations, increase the efficiency of the packet communication, decrease the total transmit power, and achieve battery saving.

### (Second embodiment)

The second embodiment explains a constitution that with respect to a packet undergoing control for increasing transmit power a plurality of times successively, the transmit power of only a pilot signal portion for use by a receiving side in determining a quality of received signal is increased in unit transmission portion of the slot after the control is repeated the plurality of times, and that the transmit power of a last pilot signal portion is reflected in whole transmission units at the time of transmitting a next slot.

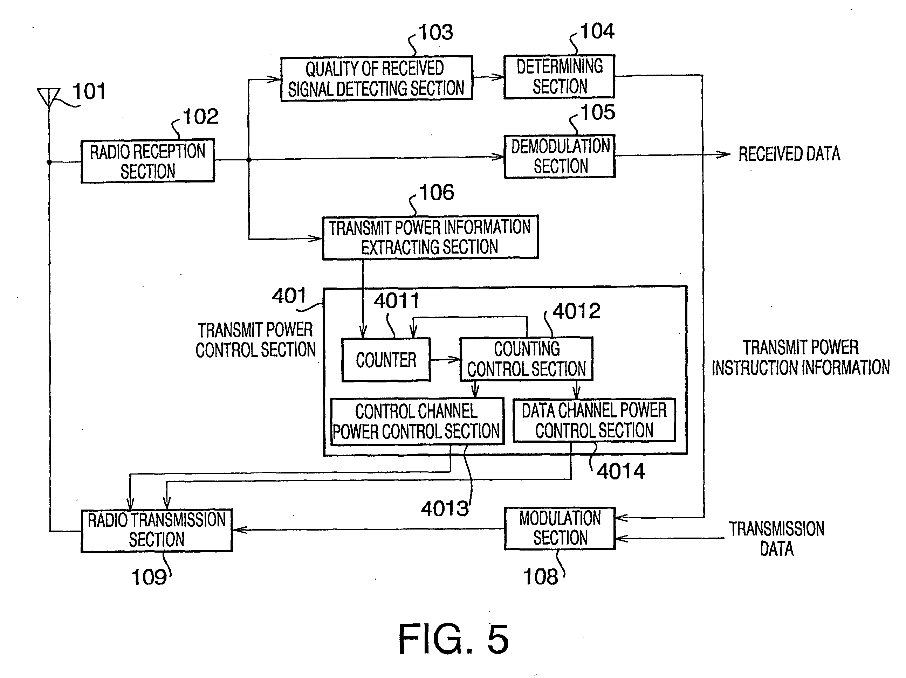

FIG.5 is a block diagram illustrating a configuration of a packet communication apparatus according to the second embodiment of the present invention. In addition, in FIG.5, the same sections as those illustrated in FIG.2 are assigned the same reference numerals as those in FIG.2 to omit detailed explanations thereof.

In the configuration illustrated in FIG.5, a configuration of transmit power control section 401 is different from a corresponding configuration illustrated in FIG.2. That is, transmit power control section 401 has counter 4011 that counts the number of pieces of transmit instruction information, counting control section 4012 that controls transmit power on a control channel for transmitting, for example, a pilot signal, and transmit power on a data channel for transmitting data independently to increase or decrease respective power corresponding to the count number of counter 4011, control channel power control section 4013 that performs power control on the control channel, and data channel power control section 4014 that performs power control on the data channel.

An explanation is given of the operation of the packet communication apparatus with the above configuration.

Radio reception section 102 performs predetermined processing on a received signal, and outputs the resultant signal to transmit power information extracting section 106. Transmit power instruction information extracted in transmit power information extracting section 106 is input to counter 4011 in transmit power control section 401. According to the transmit power instruction information, transmit power control section 401 provides an instruction for increasing or decreasing transmit power on the control channel to radio processing section 109, while when the section 401 receives the instruction information for increasing the power successively a predetermined number of times successively, the section 401 does not increase the transmit power of transmission units in a packet on the data channel after receiving the information a predetermined number of times. Then, on the data channel, the transmit power of a last control signal portion is reflected in transmit power of signal portions on the data channel (data signal portions) at the time of starting transmitting a transmission unit of a next slot.

Specifically, counter 4011 counts the number of times the transmit power instruction information indicative of increasing the power is repeated successively for the data channel. Count control section 4011 observes whether or not the instruction information for increasing the power is repeated successively a predetermined number of times. For example, the count number of the instruction information for increasing the power is compared with a threshold.

Then, when transmit power control section 401 detects a situation that the instruction information for increasing the power is repeated successively a predetermined number of times, for example, when the number of times the instruction information for increasing the power is repeated successively exceeds a predetermined threshold, the section 401 outputs an instruction signal for halting the power control on transmission units after the situation to data channel power control section 4014. Data channel power control section 4014 controls radio transmission section 109 so that the section 109 halts the power control on transmission units after the situation on the data channel.

Meanwhile, on the control channel, control channel power control section 4013 controls radio transmission section 109 so that the section 109 increases or decreases the power according to the transmit power instruction information. Radio transmission section 109 adjusts a gain according to the instruction signal using a gain controller such as an amplifier, and thereby performs transmit power control.

Then, with respect to the control channel, counting control section 4012 instructs radio transmission section 109 to reflect the transmit power of a last control signal portion (for example, pilot signal portion) in transmit power of data signal portions at the time of starting transmitting a transmission unit of a next slot.

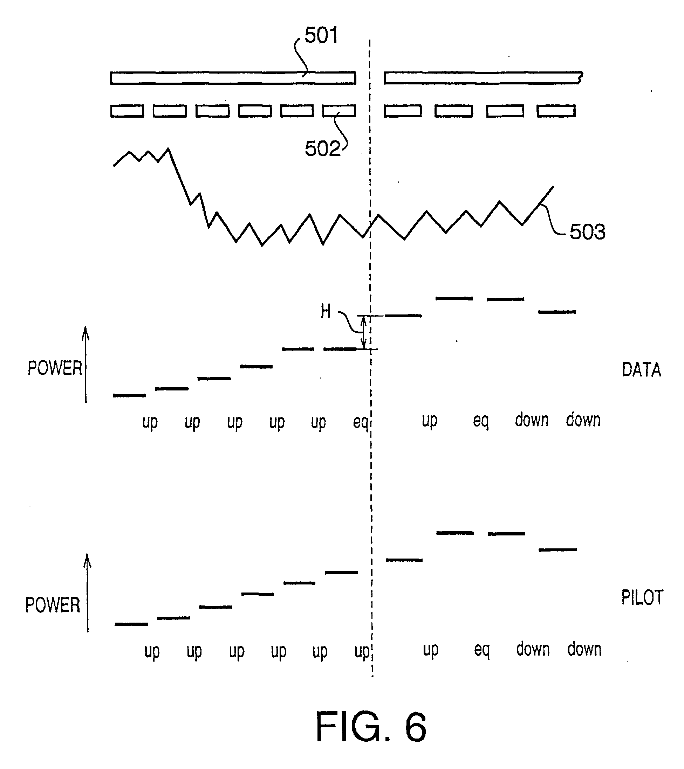

The transmit power is performed as shown in FIG.6. Packet 501 is divided into a plurality of transmission units 502 to be transmitted sequentially. When received quality 503 deteriorates due to a variation in a propagation path, power control instruction for increasing transmit power is output under the transmit power control.

In this case, when the instruction for increasing the power is repeated a predetermined number of times (four times in FIG.6), the transmit power control is halted on data signals. In FIG.6, the last unit transmission portion of the packet does not undergo the transmit power control. Meanwhile, the transmit power control is performed on each unit transmission portion of a pilot signal to be transmitted on the control channel according to the power instruction information. Then, on the data channel, the transmit power control is performed on a beginning unit transmission portion of a next packet according to the power instruction information of a last pilot signal. In other words, on a data signal, an amount denoted with "H" corresponding to the transmit power instruction information in FIG.5 is reflected in the beginning unit transmission portion of the next packet.

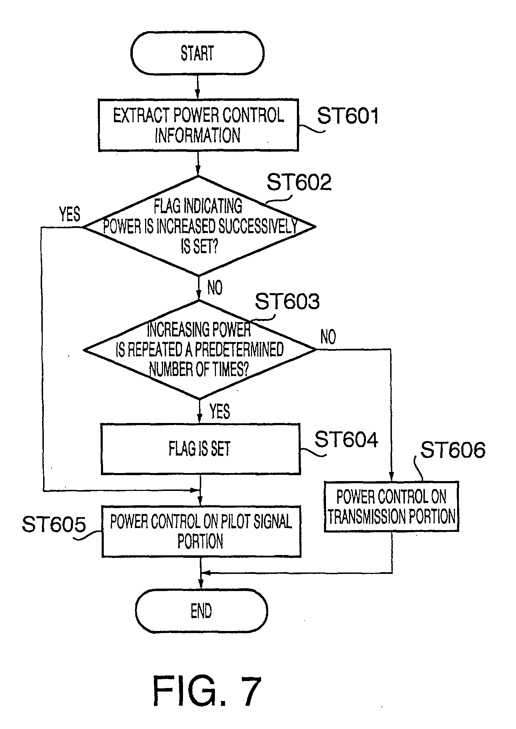

The transmit power control method as described above is next explained using a flowchart in FIG.7.

At ST 601, power control instruction information is extracted from a received signal. At ST602, it is judged that a flag is set indicative of that the power control instruction information is repeated successively a predetermined number of times.

When the flag is not set, it is judged that the power control instruction information is indicative of increasing power and that the power increasing instruction is repeated successively a predetermined number of times (ST603). When the flag is set, transmit power control is performed only on a pilot signal portion of a control channel according the power control instruction information (ST605). In other words, the transmit power control is halted on a signal potion of data channel.

Further, when the power increasing instruction is repeated successively a predetermined number of time, the flag is set (ST604), and the transmit power control is performed on only a pilot signal portion of the control channel according to the power control instruction information (ST605). In other words, the transmit power control is halted on a data signal portion.

When the power increasing instruction is not repeated successively a predetermined number of times, the power control is performed on the data channel and control channel for each unit transmission portion according to the power control instruction information (ST606).

A situation that the control for increasing transmit power is repeated successively indicates that a condition is continued that increasing the transmit power does not sufficiently compensate for deterioration of a received signal quality due to propagation path degradation. In this case, it is considered that transmission units are not received accurately, and that a possibility that a packet is eventually retransmitted is high.

According to the transmit power control method of this embodiment, successive pieces of power control instruction information are counted, and when the control information for increasing the power is repeated a predetermined number of times or more, the transmit power on a pilot signal portion control is only increased, and the transmit power on a data signal portion is not increased. It is thereby possible for the power control to continue to operate accurately between a transmitting station and a receiving station that judges a quality of received signal from the pilot signal portion without forcing the transmitting side to transmit signals with unnecessary high power. As a result, it is possible to reduce interference in peripheral stations and increase the efficiency of packet communication. Further, the power control instruction information on a pilot signal portion is reflected at the time of starting the transmit power control on a data signal portion, whereby it is possible to transmit packets assuredly.

On a poor communication channel, thus controlling transmit power of a pilot signal portion and data signal portion separately enables the power control to continue to operate accurately and further enables transmission not to be performed with unreasonable high power. It is thereby possible to reduce interference in peripheral stations, increase the efficiency of packet communications, and perform more proper transmit power control in transmitting a next packet.

The packet communication apparatus according to either of the above first and second embodiments is applicable to a base station apparatus and a communication terminal apparatus such as a mobile station in a digital radio communication system. It is thereby possible to achieve radio communications with high efficiency without consuming power wastefully.

A packet communication apparatus of the present invention adopts a configuration having an extractor that extracts transmit power control information from a packet signal comprised of transmission units each including the transmit power control information, a determiner that determines quality deterioration of the packet signal, and a controller that performs control for halting transmit power control on a transmission unit to be transmitted after determining the quality deterioration on the packet signal, based on a determined result.

According to this configuration, since the power control is halted and the power control information is only stored when a quality of the packet signal deteriorates, whereby it is possible to suppress wasteful power consumption by not increasing the transmit power.

Further, since transmission is not performed with unreasonable high power on a poor communication channel, it is possible to reduce interference in peripheral communication stations, increase the efficiency of the packet communication, decrease the total transmit power, and achieve battery saving.

A packet communication apparatus of the present invention adopts another configuration having storage that stores the transmit power control information for the unit transmission portion to be transmitted after determining the quality deterioration on the packet signal, where based on the transmit power control information stored in the storage, the controller performs the transmit power control on a beginning unit transmission portion of a next packet.

According to this configuration, since the stored power control instruction information is reflected in a transmission unit of a next pocket, it is possible to transmit the packet assuredly. Further, proper transmit power control can be performed starting from a next packet signal. It is therefore possible to perform efficient communications while decreasing interference in other stations.

A packet communication apparatus of the present invention adopts another configuration having an extractor that extracts transmit power control information from packet signals each comprised of transmission units each including the transmit power control information, the packet signals being transmitted using a data channel and a control channel, a determiner that determines quality deterioration of the packet signals, and a controller that performs control for halting transmit power control on a transmission unit to be transmitted after determining the quality deterioration on a packet signal for the data channel signal, based on a determined result.

According to this configuration, on a poor communication channel, thus controlling transmit power of a pilot signal portion and data signal portion separately enables power control to continue to operate accurately and further enables transmission not to be performed with unreasonable high power. It is thereby possible to reduce interference in peripheral stations, increase the efficiency of packet communications, and perform more proper transmit power control in transmitting a next packet.

A packet communication apparatus of the present invention adopts another constitution where based on the transmit power control information for a last unit transmission portion of the packet signal on the control channel, the controller performs the transmit power control on a beginning unit transmission portion of a next packet on the data channel.

According to this constitution, the power control instruction information of a pilot signal portion is reflected at the time of starting the transmit power control on a data signal portion, whereby it is possible to transmit packets assuredly.

In the packet communication apparatus of the present invention, it is preferable for the determiner to determine the quality deterioration using the number of times the transmit power control information for increasing transmit power is repeated successively.

A communication terminal apparatus of the present invention is characterized by having the above packet communication apparatus. A base station apparatus of the present invention is characterized by having the above packet communication apparatus. According to these constitutions, it is possible to achieve efficient radio communications without consuming power wastefully.

A transmission power control method of the present invention has the steps of extracting transmit power control information from a packet signal comprised of transmission units each including the transmit power control information, determining quality deterioration of each of the packet signals, performing control for halting transmit power control on a transmission unit to be transmitted after determining the quality deterioration on the packet signal, based on a determined result, and performing the transmit power control on a beginning unit transmission portion of a next packet based on the transmit power control information for a transmission unit after determining the quality deterioration on the packet signal.

According to this method, since the power control is halted and the power control information is only stored when a quality of the packet signal deteriorates, whereby it is possible to suppress wasteful power consumption by not increasing the transmit power. Further, since transmission is not performed with unreasonable high power on a poor communication channel, it is possible to reduce interference in peripheral communication stations, increase the efficiency of the packet communication, decrease the total transmit power, and achieve battery saving.

Furthermore, since the stored power control instruction information is reflected in a transmission unit of a next pocket, it is possible to transmit the packet assuredly. Moreover proper transmit power control can be performed starting from a next packet signal. It is therefore possible to perform efficient communications while decreasing interference in other stations.

A transmit power control method of the present invention has the steps of extracting transmit power control information from packet signals each comprised of transmission units each including the transmit power control information, the packet signals being transmitted using a data channel and a control channel, determining quality deterioration of each of the packet signals, performing control for halting transmit power control on a transmission unit to be transmitted after determining the quality deterioration on a packet signal for the data channel signal, based on a determined result, and performing the transmit power control on a beginning unit transmission portion of a next packet on the data channel, based on the transmit power control information for a last unit transmission portion in the packet signal on the control channel.

According to the method, on a poor communication channel, thus controlling transmit power of a pilot signal portion and data signal portion separately enables power control to continue to operate accurately and further enables transmission not to be performed with unreasonable high power. It is thereby possible to reduce interference in peripheral stations, increase the efficiency of packet communications, and perform more proper transmit power control in transmitting a next packet.

In the transmit power control method of the present invention, it is preferable to determine the quality deterioration using the number of times the transmit power control information for increasing transmit power is repeated successively.

The present invention is not limited to the above-mentioned embodiments, and is capable of being carried into practice with various modifications thereof . For example, while the above embodiments explain the case where as a method of determining quality deterioration, the method is used of counting the number of times the instruction for increasing transmit power is repeated successively, another method is applicable in the present invention as the method of determining quality deterioration. In other words, the method of determining quality deterioration is not limited to any particular one in the present invention.

As described above, the packet communication apparatus of the present invention is capable of performing power control adapted to packet communications, suppressing excessive power control for compensating for deterioration of communication path quality, and decreasing interfering power in peripheral communication stations and also total transmit power.

This application is based on the Japanese Patent Applications No.HEI11-156663 filed on June 3, 1999, and No.HEI11-188649 filed on July 2, 1999, entire contents of which are expressly incorporated by reference herein.

### Industrial Applicability

The present invention is applicable to a base station apparatus and communication terminal apparatus in a digital radio communication system.

## Claims

1. A packet communication apparatus comprising:
extracting means for extracting transmit power control information from a packet signal comprised of transmission units each including the transmit power control information;
determining means for determining quality deterioration of the packet signal; and
control means for performing control for halting transmit power control on a transmission unit to be transmitted after determining the quality deterioration on the packet signal, based on a determined result.

2. The packet communication apparatus according to claim 1, further comprising:
storage means for storing the transmit power control information for the unit transmission portion to be transmitted after determining the quality deterioration on the packet signal;
wherein based on the transmit power control information stored in the storage means, the control means performs the transmit power control on a beginning unit transmission portion of a next packet.

3. A packet communication apparatus comprising:
extracting means for extracting transmit power control information from packet signals each comprised of transmission units each including the transmit power control information, the packet signals being transmitted using a data channel and a control channel;
determining means for determining quality deterioration of each of the packet signals; and
control means for performing control for halting transmit power control on a transmission unit to be transmitted after determining the quality deterioration on a packet signal for the data channel signal, based on a determined result.

4. The packet communication apparatus according to claim 3, wherein based on the transmit power control information for a last unit transmission portion of the packet signal on the control channel, the control means performs the transmit power control on a beginning unit transmission portion of a next packet on the data channel.

5. The packet communication apparatus according to claim 1, wherein the determining means determines the quality deterioration using the number of times the transmit power control information for increasing transmit power is repeated successively.

6. A communication terminal apparatus provided with a packet communication apparatus, said packet communication apparatus comprising:
extracting means for extracting transmit power control information from a packet signal comprised of transmission units each including the transmit power control information;
determining means for determining quality deterioration of the packet signal; and
control means for performing control for halting transmit power control on a transmission unit to be transmitted after determining the quality deterioration on the packet signal, based on a determined result.

7. A base station apparatus provided with a packet communication apparatus, said packet communication apparatus comprising:
extracting means for extracting transmit power control information from a packet signal comprised of transmission units each including the transmit power control information;
determining means for determining quality deterioration of the packet signal; and
control means for performing control for halting transmit power control on a transmission unit to be transmitted after determining the quality deterioration on the packet signal, based on a determined result.

8. A transmit power control method comprising the steps of:
extracting transmit power control information from a packet signal comprised of transmission units each including the transmit power control information;
determining quality deterioration of the packet signal;
performing control for halting transmit power control on a transmission unit to be transmitted after determining the quality deterioration on the packet signal, based on a determined result; and
performing the transmit power control on a beginning unit transmission portion of a next packet, based on the transmit power control information for a transmission unit after determining the quality deterioration on the packet signal.

9. A transmit power control method comprising the steps of:
extracting transmit power control information from packet signals each comprised of transmission units each including the transmit power control information, the packet signals being transmitted using a data channel and a control channel;
determining quality deterioration of each of the packet signals;
performing control for halting transmit power control on a transmission unit to be transmitted after determining the quality deterioration on a packet signal for the data channel signal, based on a determined result; and
performing the transmit power control on a beginning unit transmission portion of a next packet on the data channel, based on the transmit power control information for a last unit transmission portion in the packet signal on the control channel.

10. The transmit power control method according to claim 8, wherein the quality deterioration is determined using the number of times the transmit power control information for increasing transmit power is repeated successively.
